(19) Europäisches Patentamt / European Patent Office / Office européen des brevets

(11) **EP 2 383 584 B1**

(12) **EUROPEAN PATENT SPECIFICATION**

(45) Date of publication and mention
of the grant of the patent:
**22.01.2014 Bulletin 2014/04**

(51) Int Cl.:
**G01S 15/96** (2006.01)

(21) Application number: **11162963.0**

(22) Date of filing: **19.04.2011**

(54) **Method and device for detecting ultrasound wave, and method and device for detecting school of fish**

Verfahren und Vorrichtung zur Erfassung von Ultraschallwellen sowie Verfahren und Vorrichtung zur Erkennung von Fischschwärmen

Procédé et dispositif pour détecter les ondes ultrasonores, et procédé et dispositif pour détecter un banc de poissons

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2010 JP 2010095774**

(43) Date of publication of application:
**02.11.2011 Bulletin 2011/44**

(73) Proprietor: **Furuno Electric Company, Limited Nishinomiya-city, Hyogo-Pref. (JP)**

(72) Inventor: **Dubuis, Jerome
Nishinomiya-city Hyogo (JP)**

(74) Representative: **Williams, Michael Ian
Cleveland
10 Fetter Lane
London EC4A 1BR (GB)**

(56) References cited:
**WO-A2-2006/133304       US-A- 5 377 163
US-A- 5 561 641       US-A- 6 084 827
US-A1- 2008 080 317**

**Description**

The present invention relates to a method and a device for transmitting an ultrasound signal and detecting a target object such as a school of fish based on echo signals, and, more specifically to a method and a device for providing discriminating information on the classification of the target object such as a fish species.

Conventionally, ultrasound detection devices for transmitting an ultrasound wave and detecting a target object based on a corresponding echo signal are known. As an example of such an ultrasound detection device, various kinds of school-of-fish detection devices are disclosed. Generally, such a school-of-fish detection device transmits ultrasound signals under water and receives corresponding echo signals reflected on school(s) of fish or the like to detect the school (s) of fish. As a kind of such a school-of-fish detection device, for example in JP40-25555B, a school-of-fish detection device which transmits ultrasound signals at two different frequencies to carry out the school-of-fish detection is disclosed.

Currently, annual fish catches have been limited for every fish species, every country and every ship for protection of global marine resources. For example, in TAC (Total Allowable Catch), annual fish catches are limited for each country for every fish species.

Whereas, in IVQ (Individual Vessel Quota), annual fish catches are further limited for every fish species and every fishing boat. If one caught fish more than the fish catch limitations, various kinds of penalties such as a reduction of fish catch of the following year will be imposed.

Therefore, it is desirable for every fishing boat to certainly catch only targeted fish species.

US 5,561,641 discloses an underwater detection system in which a transmitting transducer emits an ultrasonic pulse signal in a wide search area. First and second ultrasonic receiving beams are scanned in the search area with a relative angular displacement. The phase difference between the signals picked up by the receiving beams is calculated, from which the carrier frequency of the received ultrasonic signals can be determined. By detecting a shift in frequency, the velocity of swimming fish schools can be determined. The degree of velocity variation, presented in the form of a variance data picture, is useful for discriminating fish species.

US 5,377,163 discloses a sonar device in which a broadband acoustic signal is emitted in an aquatic environment. The echoes from aquatic life forms are received and analysed. After extracting features from the broadband echoes, a trained classifier, such as a neural network, is used to automatically identify an aquatic life form.

WO 2006/133304 discloses a method of characterizing a population of fish. The method comprises generating, within an aquatic environment, horizontally directed acoustic signals, receiving return acoustic signals, and interpreting the return acoustic signals so as to detect and to characterize the fish population. In one embodiment, two transmission signals are transmitted in different frequency bands. The difference in target strength of the two target strength images yields an image of the difference in fish target strength for the different frequency bands. Comparison of the differences and absolute levels are used to distinguish fish species.

The present invention is made in view of the situations described above, and provides a method and device for detecting an ultrasound wave that can distinguish a classification of a target object to provide more exact information on the target object.

Particularly, for example, the present invention is to achieve a method and a device for detecting a school-of-fish that can determine a fish species to provide more accurate information, even if two or more kinds of schools of fish or two or more kinds of fish exist.

According to one aspect of the present invention, an ultrasound detection device is provided. The device detects a target object by using a plurality of echo signals acquired by a plurality of ultrasound signals at different frequencies. The device includes a reflection intensity difference calculation module for calculating differences in reflection intensities of the echo signals at different frequencies, a histogram calculation module for calculating a histogram of the differences in reflection intensities, and a similarity calculation module for calculating a similarity between the histogram of the differences in reflection intensities and a reference histogram, from which a classification of the target object can be determined.

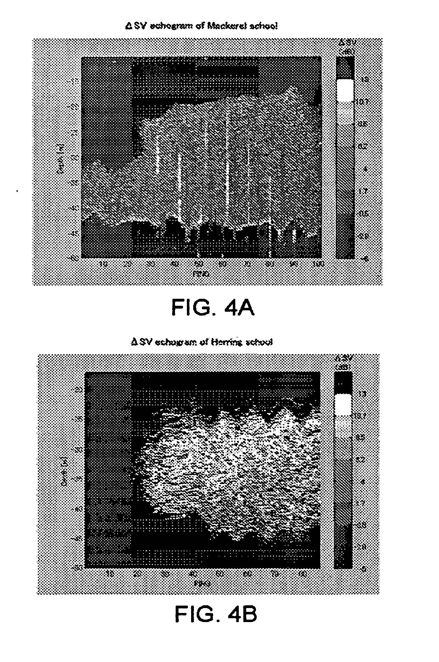

The invention utilizes the fact that the difference between two or more echo signals acquired for respective frequencies changes according to the kind of target object. For example, a case where the reflection intensities of the echo signals are used and a school of fish is set as the target object is considered. As shown in Figs. 4A and 4B, a reflection intensity difference of the school of fish of herrings and a reflection intensity difference of a school of fish of mackerels show different characteristics. Therefore, the histograms are calculated based on the measured reflection intensity differences, respectively, and the histograms based on the actual measurement are compared with the reference histogram set beforehand for every classification of the target objects. If the histogram based on the measurement has a similar characteristic to the reference histogram, the similarity will be higher. On the other hand, if the histogram based on the measurement has a different characteristic from the reference histogram, the similarity will be lower. Thus, by calculating such a similarity, information to be used for discriminating the classification of the target object can be acquired. For example, information to be used for discriminating a fish species of the school of fish or single fish can be provided to a fisherman.

The ultrasound detection device may further include a display module for displaying image data based on the similarity.

With this configuration, by displaying the data based on the similarity, an operator can visually recognize the data based on the similarity and more easily discriminate the kind or classification of the target object.

The difference value of the echo signals at different frequencies may be difference values of volume backscattering strength of the echo signals at different frequencies.

This configuration shows a case where the volume backscattering strengths are used as an example of the difference values of the echo signals.

The similarity may be a likelihood obtained from correlation processing of the histogram of the difference values and the reference histogram set for every classification of the target object.

This configuration shows a case where the likelihood is used as an example of the similarity.

The reflection intensity difference calculation module may calculate the difference value only when all the echo signals at different frequencies is more than a predetermined threshold that is set for each frequency.

With this configuration, when the level of the echo signal (for example, the reflection intensity) is low, the calculation of the difference value is not performed. Here, if the reflection intensity is not more than the predetermined threshold for all the frequencies, the reflection intensity may not indicate the target object but a noise with a high possibility. In this case, because the difference values are not necessary for discriminating the classification of the target object with a high possibility and, thus, even if the difference values are not calculated, it does not affect the calculation of the data relating to the final discrimination of the target object, such as the calculation of the similarity. Therefore, by not calculating the difference values when the reflection intensities are low for all the frequencies, unnecessary calculation can be omitted and the operational resource can be saved.

The ultrasound detection device may further include a reference database for storing the reference histogram, and a reference histogram setting module for updating the reference histogram stored in the reference database.

With this configuration, the reference histogram can be changed dynamically. Therefore, the reference histogram according to a situation can be set. Thereby, the data from which the classification of the target object can be more correctly distinguished can be provided.

The device may include a display module for displaying image data of a distribution of the difference values.

The above configuration shows the case where the similarity is calculated based on the histogram of the difference values. However, the difference values change according to the classification of the target object, as described above. Therefore, by displaying at least only the difference values, the data from which the classification of the target object can correctly be determined can be provided with a less amount of data and processing.

According to another aspect of the present invention, a school-of-fish detection device is provided. The device includes the ultrasound detection device. The target object is at least one of a school of fish or a single fish.

This configuration shows an example where the above ultrasound detection device is utilized as the school-of-fish detection device by setting the school of fish or the single fish as the target object. Thereby, the data from which a fish species can correctly be determined based on two or more kinds of echo signals obtained from different kind of school of fish or different fish can be provided.

According to another aspect of the present invention, a method of detecting a target object by using a plurality of echo signals acquired by a plurality of ultrasound signals at different frequencies is provided. The method includes calculating differences in reflection intensities of the echo signals at different frequencies, calculating a histogram of the differences in reflection intensities, and calculating a similarity between the histogram of the differences in reflection intensities and a reference histogram, from which a classification of the target object can be determined.

For example, a case where the reflection intensities of the echo signals are used and a school of fish is set as the target object is considered. As shown in Figs. 4A and 4B, a reflection intensity difference of the school of fish of herrings and a reflection intensity difference of a school of fish of mackerels show different characteristics. Therefore, the histograms are calculated based on the measured reflection intensity differences, respectively, and the histograms based on the actual measurement are compared with the reference histogram set beforehand for every classification of the target objects. If the histogram based on the measurement has a similar characteristic to the reference histogram, the similarity will be higher. On the other hand, if the histogram based on the measurement has a different characteristic from the reference histogram, the similarity will be lower. Thus, by calculating such a similarity, information to be used for discriminating the classification of the target object can be acquired. For example, information to be used for discriminating a fish species of the school of fish or single fish can be provided to a fisherman.

The target object may be at least one of a school of fish or a single fish.

This configuration shows an example where the above ultrasound detection device is utilized as the school-of-fish detection device by setting the school of fish or the single fish as the target object. Thereby, the data from which a fish species can correctly be determined based on two or more kinds of echo signals obtained from different kind of school of fish or different fish can be provided.

According to embodiments of the present invention, the information from which the classification of the target object can be distinguished more correctly is provided to an operator.

Specifically, for example, even if two or more kinds of schools of fish or fish exist, information from which a fish species can be determined more correctly is provided to the fisherman.

The present disclosure is illustrated by way of example and not by way of limitation in the figures of the accompanying drawings, in which the like reference numerals indicate like elements and in which:

Fig. 1 is a block diagram showing a configuration of a school-of-fish detection device according to a first embodiment of the present invention;
Fig. 2 is a flowchart showing an outline of processing performed by a fish species discriminating information calculation module, a display control module, and a display module;
Fig. 3 is a flowchart showing a flow of calculating a volume backscattering difference;
Figs. 4A and 4B are views showing distributions (echograms) of the volume backscattering difference based on fish species;
Fig. 5 is a graph showing actual measurement histograms based on fish species;
Fig. 6 is a flowchart showing processing of calculating a similarity;
Figs. 7A and 7B are graphs for illustrating the concept of a likelihood;
Fig. 8 is a view showing an example of a display screen image; and
Fig. 9 is a block diagram showing a configuration of a school-of-fish detection device according to a second embodiment of the present invention.

Hereinafter, a school-of-fish detection device according to some embodiments of the present invention is described with reference to the accompanying drawings. Note that, although the school-of-fish detection device is described herein as an example of the application of the present invention, the technical features of the present invention described below may also be applied to other ultrasound detection devices that transmit an ultrasound signal and perform a target object detection based on an echo signal corresponding to the ultrasound signal.

**First Embodiment**

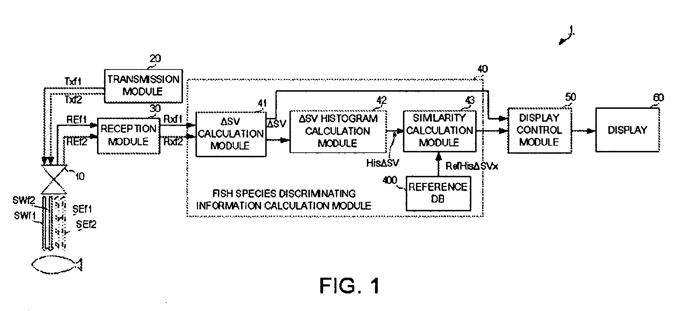

Fig. 1 is a block diagram showing a configuration of a school-of-fish detection device 1 of a first embodiment. The school-of-fish detection device 1 includes a transducer 10, a transmission module 20, a reception module 30, a fish species discriminating information calculation module 40, a display control module 50, and a display 60.

The transmission module 20 generates an ultrasound transmission signal at a predetermined frequency and outputs it to the transducer 10. In this embodiment, the transmission module 20 has a configuration such that the module 20 can generate ultrasound transmission signals at two or more frequencies, and generates the ultrasound transmission signals of at least two different frequencies. For example, the transmission module 20 generates an ultrasound transmission signal at 200 kHz as a first frequency f1 and an ultrasound transmission signal at 60 kHz as a second frequency f2. Note that the combination of frequencies is not limited to the above frequencies and they may be selected suitably based on a target fish species or the like. Below, a case where the first and second frequencies f1 and f2 are used is particularly described.

The transmission module 20 outputs an ultrasound transmission signal Txf1 at the first frequency f1 and an ultrasound transmission signal Txf2 at the second frequency f2 at a predetermined time interval (every ping) to the transducer 10.

The transducer 10 includes an ultrasound transducer having a structure corresponding to each of the frequencies of the above ultrasound transmission signals. The transducer 10 transmits ultrasound waves SWf1 and SWf2 under water based on the ultrasound transmission signals Txf1 and Txf2 at respective frequencies generated by the transmission module 20. The transducer 10 receives reflection waves SEf1 and SEf2, which are produced by the transmitted ultrasound waves SWf1 and SWf2 at respective frequencies being reflected on a target object such as a school of fish, by the above ultrasound transducer, then generates echo signals REf1 and REf2 for respective frequencies, and then outputs them to the reception module 30.

The reception module 30 samples the echo signals REf1 and REf2 at respective frequencies for every ping which is inputted from the transducer 10 at a predetermined sampling timing interval, and then generates reception data Rxf1 and Rxf2 for respective frequencies. This sampling timing interval is set based on distance resolution in the depth direction. The reception module 30 outputs the reception data Rxf1 and Rxf2 for every ping to the fish species discriminating information calculation module 40.

The fish species discriminating information calculation module 40 includes a ΔSV (volume backscattering difference) calculation module 41 corresponding to a "reflection intensity difference calculation module" in the claims, and a ΔSV histogram calculation module 42, a similarity calculation module 43, and a reference DB (database) 400 corresponding to a "histogram calculation module" in the claims.

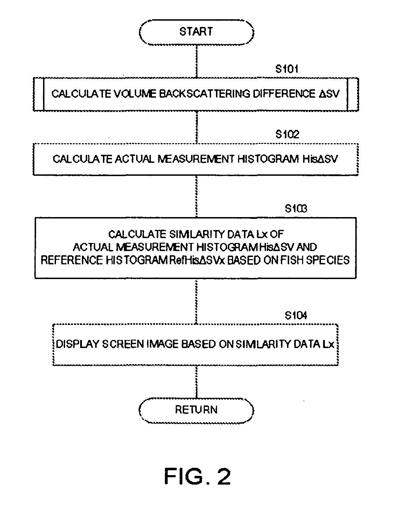

According to a flow as shown in Fig. 2, the fish species discriminating information calculation module 40 calculates similarity data Lx, and then outputs it to the display control module 50. Fig. 2 is a flowchart showing outline processing of the fish species discriminating information calculation module 40, the display control module 50, and the display 60.

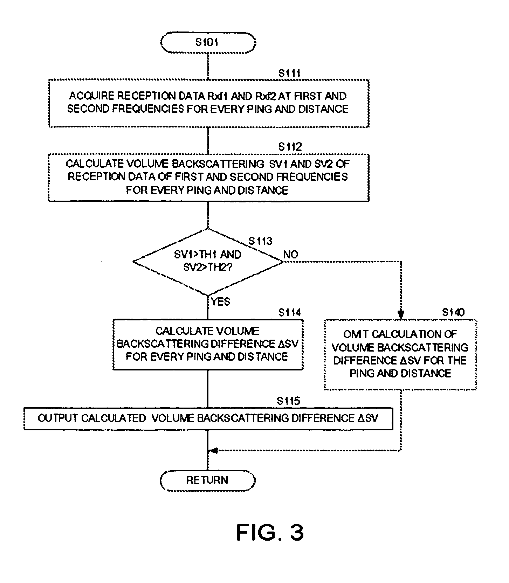

The ΔSV calculation module 41 of the fish species discriminating information calculation module 40 calculates the volume backscattering difference ΔSV based on the reception data for respective frequencies inputted from the reception module 30 (Fig. 2: S101). Specifically, the calculation module 41 calculates using a method as shown in Fig. 3. Fig. 3 is a flowchart showing a calculation flow of the volume backscattering difference ΔSV

The ΔSV calculation module 41 calculates a volume backscattering strength SV based on the reception data for respective frequencies inputted from the reception module 30. Specifically, when the first frequency f1 and the second frequency f2 are used, the ΔSV calculation module 41 acquires the reception data Rxf1 at the first frequency f1 and the reception data Rxf2 at the second frequency f2 (Fig. 3: S111).

The ΔSV calculation module 41 calculates a volume backscattering strength SV1 based on the acquired reception data Rxf1 and calculates a volume backscattering strength SV2 based on the acquired reception data Rxf2 (Fig. 3: S112).

Here, the ΔSV calculation module 41 calculates the volume backscattering strengths SV1 and SV2 for respective reception data for every distance, for every ping. The following equation may be used for the calculation of SV, for example. Note that, in the following equation, although SV is used as a representative value of SV1 and SV2, when calculating SV1 and SV2, values corresponding to respective frequencies will be used.

$$SV = EL-SL-ME+Cb+Cd \qquad ... (1)$$

Here, EL is a received voltage of the echo signal, SL is a source level of the ultrasound transmission signal, and ME is a wave-receiving sensitivity of the transducer.

Moreover, Cb is a correction term based on the characteristics of a transmitting ultrasound beam, Cd is a correction term relating to attenuation in the distance direction (depth direction), and they are expressed by the following equations, respectively.

$$Cb = -10\log(c\tau/2)-20\log\theta+31.6$$

$$Cd = +20\log r+2\alpha r/1000$$

Here, c is a speed of sound, τ is a pulse width, θ is a half angle of the transmitting beam, r is a distance to the target object, and α is an absorption loss coefficient underwater.

The ΔSV calculation module 41 distinguishes whether the calculated volume backscattering strengths SV1 and SV2 are greater than the thresholds Th1 and Th2 which are set beforehand, respectively. The thresholds Th1 and Th2 are set beforehand herein to classify a noise and a significant echo. Here, the ΔSV calculation module 41 distinguishes for every set of the volume backscattering strengths SV1 and SV2 which are set based on the ping and the distance direction position. Then, if the volume backscattering strength SV1 which constitutes the set being greater than the threshold Th1 (i.e., SV1>Th1) and the volume backscattering strength SV2 being greater than the threshold Th2 (i.e., SV2>Th2) are both satisfied, the ΔSV calculation module 41 then calculates the volume backscattering difference ΔSV (Fig. 3: Yes at S113). On the other hand, if the volume backscattering strength SV1 is less than the threshold Th1 or if the volume backscattering strength SV2 is less than the threshold Th2, the calculation of the volume backscattering difference ΔSV for the set concerned is omitted (Fig. 3: No at S113 → S140).

As described above, when either one of the volume backscattering strengths SV1 and SV2 at respective frequencies are below the predetermined threshold, the calculation of the volume backscattering difference ΔSV is omitted to reduce the load on the resource which constitutes the ΔSV calculation module 41.

The ΔSV calculation module 41 calculates the volume backscattering difference Δ SV for every ping and the distance direction position which satisfy the threshold conditions of the above step S113 (Fig. 3: S 114). The volume backscattering difference ΔSV can be calculated by subtracting the volume backscattering strength SV2 from the volume backscattering strength SV1 (i.e., calculating ΔSV= SV1-SV2). Such a volume backscattering difference ΔSV indicates different characteristics for different fish species, as shown in Fig. 4. Figs. 4A and 4B are views showing distributions (echograms) of the volume backscattering difference ΔSV based on fish species, where Fig. 4A shows a distribution for mackerels and Fig. 4B shows a distribution for herrings. Moreover, in Figs. 4A and 4B, the horizontal axis shows a transition of a ping number or a transmission time point (i.e., a detection time point), and the vertical axis shows a depth (i.e., a distance direction position). In Figs. 4A and 4B, the values of the volume backscattering difference Δ SV are illustrated by contrast or gradation.

As shown in Figs. 4A and 4B, the distributions of the volume backscattering difference Δ SV differ between mackerels and herrings, and if the above calculation of the volume backscattering difference ΔSV is used, the volume backscattering differences ΔSV(M) of mackerels are distributed at a lower level than the volume backscattering differences ΔSV(H) of herrings. Thus, by calculating the volume backscattering difference ΔSV, one fish species discriminating information can be acquired. Then, such a volume backscattering difference ΔSV is outputted to the display control module 50, as shown in the block diagram of Fig. 1 and, an echogram of the volume backscattering difference ΔSV as shown in Fig. 4 is displayed on the display 60 so that fish species discriminating information can be provided to a fisherman. Thereby, the fisherman can correctly distinguish the fish species by seeing the echogram of this volume backscattering difference Δ SV.

In addition, the school-of-fish detection device 1 performs the following processing sequentially in order to calculate another school-of-fish discriminating information.

As described above, when the ping and the volume backscattering difference ΔSV for each distance direction position are calculated, the ΔSV calculation module 41 outputs the volume backscattering difference ΔSV to the ΔSV histogram calculation module 42 (Fig. 3: S115).

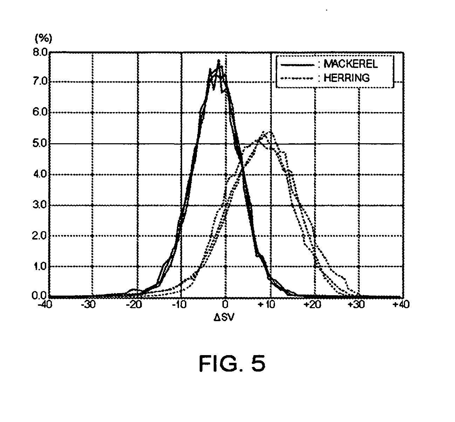

The ΔSV histogram calculation module 42 calculates an actual measurement histogram HisΔSV based on the volume backscattering differences ΔSV corresponding to all the distance direction positions for the predetermined ping (Fig. 2: S102). Fig. 5 shows the actual measurement histograms HisΔSV for every fish species, where the solid lines show mackerels and the dashed lines show herrings. Note that, although three solid lines and three dashed lines are illustrated, the lines of the same type indicate the same fish species but are results based on the volume backscattering differences Δ SV from different schools of fish.

As shown in Fig. 5, if the fish species is the same, the actual measurement histogram HisΔSV of the volume backscattering difference ΔSV has substantially the same characteristic, and if the fish species is different, it exhibits a completely different characteristic. For example, if using the above calculation method of the volume backscattering difference ΔSV, for mackerels, a peak of the histogram appears around -5 to 0 in the volume backscattering difference ΔSV, which indicates a characteristic where the values are concentrated within the narrow range with respect to the ΔSV axis. Whereas, for herrings, a peak of the histogram appears around +10 in the volume backscattering difference ΔSV, which indicates a characteristic where the values are distributed over a comparatively large range with respect to the ΔSV axis. Therefore, the fish species discriminating information can also be acquired by using such an actual measurement histogram HisΔSV of the volume backscattering difference ΔSV.

In order to utilize such a characteristic, the school-of-fish detection device 1 further performs the following processing.

The ΔSV histogram calculation module 42 outputs the calculated actual measurement histogram HisΔSV to the similarity calculation module 43.

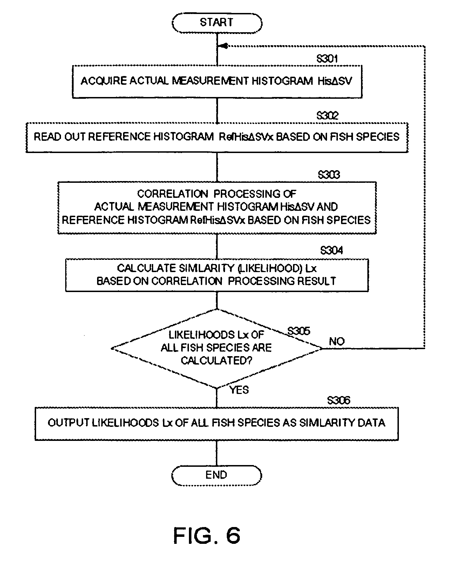

The similarity calculation module 43 calculates the similarity Lx using the actual measurement histogram HisΔSV by performing processing as shown in a flowchart of Fig. 6.

Fig. 6 is a flowchart showing similarity calculation processing.

The similarity calculation module 43 first acquires the actual measurement histogram HisΔSV from the ΔSV histogram calculation module 42 (Fig. 6: S301).

The similarity calculation module 43 reads out a reference histogram RefHisΔSVx of a fish species X, which constitutes the similarity data, from the reference DB (database) 400 (Fig. 6: S302).

The reference histogram RefHisΔSVx is stored beforehand for every fish species X in the reference DB 400. The reference histogram RefHisΔSVx of a fish species X, which is specified according to a read-out control by the similarity calculation module 43, is read out from the reference DB 400 to the similarity calculation module 43.

The similarity calculation module 43 performs a correlation processing operation using the following equation based on the actual measurement histogram HisΔSV and the reference histogram RefHisΔSVx of the fish species X to calculate a correlation processing result rSX (Fig. 6: S303). Note that, in the following equation, HSV(k) indicates each element along the ΔSV axis of the actual measurement histogram HisΔSV, and MeanHSV indicates an average value of the actual measurement histogram HisΔSV. Moreover, RHSV(k) indicates each element along the SV axis of the reference histogram RefHisΔSVx, and MeanRHSV indicates an average value of the reference histogram RefHisΔSVx.

$$rSX = \frac{\sum_{k=1}^{M}\left[(HSV(k) - MeanHSV)) \cdot (RHSV(k) - MeanRHSV))\right]}{\sqrt{\sum_{k=1}^{M}(HSV(k) - MeanHSV)^2} \cdot \sqrt{\sum_{k=1}^{M}(RHSV(k) - MeanRHSV)^2}}$$

The similarity calculation module 43 calculates the similarity (likelihood) Lx to the fish species X by using the following equation based on the correlation processing result rSX calculated for the fish species X (Fig. 6: S304).

$$Lx = 100 \cdot rSX^2 \qquad \ldots (3)$$

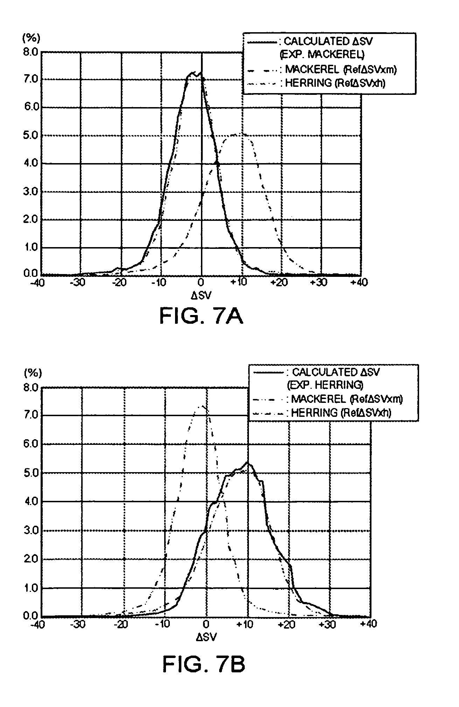

Such a likelihood Lx has the following features. Figs. 7A and 7B are graphs for illustrating the concept of the likelihood Lx, where Fig. 7A shows a case where the actual measurement histogram HisΔSV is for herrings, and Fig. 7B shows a case where the actual measurement histogram HisΔSV is for mackerels. Next, a particular case where the likelihood Lx is calculated for each actual measurement histogram HisΔSV by using the reference histogram RefHis-ΔSVxM for mackerels and the reference histogram RefHisΔSVxH for herrings is described.

As shown in Fig. 7A, if the actual measurement histogram HisΔSV is for mackerels, the actual measurement histogram HisΔSV and the reference histogram RefHisΔSVxM for mackerels have very similar characteristics, and, the correlation processing result rSX will naturally approach "1." On the other hand, the characteristics do not comparatively match between the actual measurement histograms HisΔSV and the reference histogram RefHisΔSVxH for herrings and, thus, the correlation processing result rSX becomes lower than "1" by a predetermined level. For this reason, the likelihood LxM for mackerels approaches "100" and the likelihood LxH for herrings becomes a level which is significantly lower than "100."

Whereas, if the actual measurement histogram HisΔSV is for herrings as shown in Fig. 7B, the characteristics do not comparatively match between the actual measurement histogram HisΔSV and the reference histogram RefHis-ΔSVxM for mackerels and, thus, the correlation processing result rSX becomes lower than "1" by a predetermined level. On the other hand, the actual measurement histogram HisΔSV and the reference histogram RefHisΔSVxH for herrings have very similar characteristics, and, the correlation processing result rSX will naturally approach "1." For this reason, the likelihood LxM to mackerels becomes a level sufficiently lower than "100", and the likelihood LxH to herrings approaches "100."

If the similarity calculation module 43 does not perform for set fish species such a calculation of the likelihood Lx for every fish species X, it reads out the reference histogram RefHisΔSVx of a new fish species, and then calculates the likelihood Lx similar to the above flow (Fig. 6: No at S305 → S301).

Thus, by using the likelihood Lx for every fish species X, the probability to the fish species (i.e., the probability of the fish species to be mackerels or the probability of the fish species to be herrings) can be evaluated as a value. That is, more intelligible fish species discriminating information can be provided to the fisherman.

And the similarity calculation module 43 will be outputted to the display control module 50 by using the group of these likelihoods Lx as the similarity data, if likelihood Lx is calculated to all the set fish species (Fig. 6: S305Yes->S306). Here, the similarity calculation module 43 outputs the actual measurement histogram HisΔSV and the reference histogram RefHisΔSVx of each fish species for which the calculation of the likelihood Lx is performed to the display control module 50.

The display control module 50 and the display 60 correspond to a "display module" in the claims. The display 60 is implemented with a liquid crystal display or the like, for displaying an image based on the display control by the display control module 50.

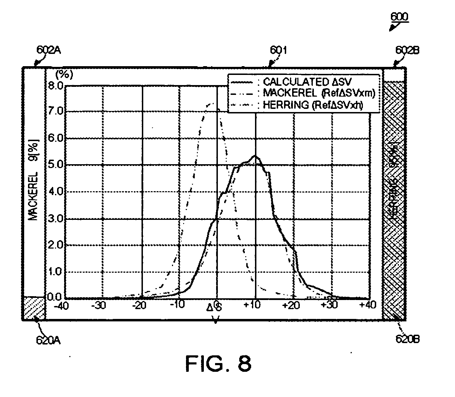

The display control module 50 controls the display so that a screen image as shown in Fig. 8 is displayed on the display 60 by using the similarity data which is inputted from the similarity calculation module 43 and which contains the likelihood Lx for every fish species, and each of the histograms. Fig. 8 is a view showing an example of the display screen.

The display screen 600 includes a histogram display window 601 and a likelihood display windows 602A and 602B. More specifically, the histogram display window 601 is arranged at the center of the display screen 600.

Further, a likelihood display window 602A of the likelihood LxM for mackerels and a likelihood display window 602B of the likelihood LxH for herrings are arranged on both sides of the histogram display window 601 (mackerels on the right end and herrings on the left end, respectively).

The actual measurement histogram HisΔSV and the reference histogram RefHisΔSVx of each fish species for which the likelihood Lx is calculated (both are described above) are drawn in the histogram display window 601.

The likelihood to mackerels of the actual measurement histogram His$\Delta$SV is drawn by a bar 620A in the likelihood display window 602A, along with a numerical value by percentage. Here, the bar 620A is drawn in the height corresponding to the calculated likelihood so that the height of the entire screen image indicates 100% of the likelihood. Furthermore, the color of the bar 620A is set in a stepwise fashion or with gradation according to the likelihood so that it is drawn by a color or colors according to the likelihood.

The likelihood to herrings of the actual measurement histogram His$\Delta$SV is drawn by a bar 620B in the likelihood display window 602B, along with a numerical value by percentage. Here, the bar 620B is drawn by the height and the color corresponding to the calculated likelihood, similar to the bar 620A.

By performing such an indication, the fisherman can distinguish the fish species of the detected school of fish only by looking at the indication, based on the histograms, the numerical values of the likelihood, and the colors of the bars based on the likelihoods. For example, in the example of Fig. 8, the actual measurement histogram His$\Delta$SV substantially matches with the reference histogram RefHis$\Delta$SVxH for herrings, and one can easily recognizes that the likelihood to herrings is very high. On the other hand, the actual measurement histogram His$\Delta$SV is different from the reference histogram RefHis$\Delta$SVxM for mackerels, and one can easily recognize that the likelihood to mackerels is low. Thereby, the fisherman can easily determine that the detected school of fish is herrings.

As described above, by using the configuration and processing of this embodiment, the fish species discriminating information with which one can discriminate the fish species more accurately can be provided to the fisherman.

**Second Embodiment**

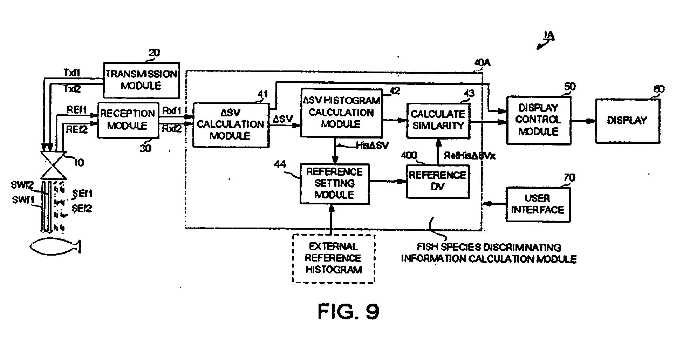

Next, a school-of-fish detection device according to a second embodiment of the present invention is described with reference to the accompanying drawings. Fig. 9 is a block diagram showing a configuration of a school-of-fish detection device 1A of this embodiment. The school-of-fish detection device 1A of this embodiment additionally includes, comparing to the school-of-fish detection device 1 of the first embodiment, a reference setting module 44 provided to the fish species discriminating information calculation module 40A, and a user interface 70. Other configurations of the school-of-fish detection device 1A are the same as that of the school-of-fish detection device 1 of the first embodiment.

The reference setting module 44 writes and updates the reference histograms RefHis$\Delta$SVx for every fish species X which are stored in the reference DB 400. An external reference histogram may be supplied to the reference setting module 44 from an external device. Moreover, the actual measurement histogram His$\Delta$SV calculated by the $\Delta$SV histogram calculation module 42 may be supplied to the reference setting module 44. The reference setting module 44 can temporarily store the external reference histogram and/or the actual measurement histogram His$\Delta$SV.

The user interface 70 accepts an input of a user's operation which causes the reference setting module 44 to give timings of writing and updating the reference DB 400. When the user inputs to give the queue, the user interface 70 causes the reference setting module 44 to execute the writing and/or updating of the reference DB 400.

Here, if the external reference histogram is specified by the user interface 70, the reference setting module 44 writes the external reference histogram into the reference DB 400. In this case, if a reference histogram of the same fish species exists, the already stored reference histogram is updated.

Whereas, if the actual measurement histogram His$\Delta$SV is specified by the user interface 70, the reference setting module 44 writes the actual measurement histogram His$\Delta$SV into the reference DB 400. Here, the fish species is visually determined by the fisherman by looking at the actually caught fish, and it is inputted by the fisherman through the user interface 70. If the reference histogram of this fish species exists, the already stored reference histogram i updated.

With such a configuration and by performing such processing, the reference histogram is not necessarily to be fixed but can be adapted to various situations. For example, the reference histogram which is more suitable for the fishery can be set by updating by the actual measurement histogram His$\Delta$SV. Moreover, the reference DB 400 can be developed variously. Thereby, the fish species discriminating information with which more exact fish species discrimination is possible can be provided to the fisherman.

Note that, although the example where the volume backscattering strength SV is used is described above, a so-called target length TS may be used so long as the difference in characteristics between the reflection intensities of every fish species. When the target length TS is used, it is more effective than the volume backscattering strength if it is applied to a single fish rather than a school of fish. In this case, the correction term Cb based on the characteristics of the transmitting ultrasound beam in Equation 1 is omissible, and the correction term Cd relating to the attenuation in the distance direction (the depth direction) may be reset suitably according to the value of TS.

Alternatively, the same or similar operations and effects of this embodiment can be obtained even if the above-described correction terms are not used upon the calculation of the volume backscattering strength SV and the target length TS.

Moreover, although the example where the correlation processing is used for the calculation of the similarity data is described in this embodiment, the likelihood Lx may be calculated by other methods as long as the similarity between the actual measurement histogram HisΔSV and the reference histogram RefHisΔSVx is reflected to the likelihood. For example, the ΔSV value at a peak of each histogram or the peak value may also be used.

Moreover, although the example where the histogram is calculated for the volume backscattering differences ΔSV at all the distance direction positions for the predetermined ping, the histogram may be calculated only using the volume backscattering difference Δ SV within a local range. In this case, the echogram as shown in Fig. 4 is displayed on the display 60, and the fisherman then specifies the range by using the user interface. The fish species discriminating information calculation module 40 calculates the histogram only by using the volume backscattering difference ΔSV within the corresponding range based on the range specification. The likelihood is then calculated as described above using the obtained histogram. By specifying the range, the fish species discriminating information can be acquired while specifying only a particular school of fish, for example, when two or more kinds of schools of fish exist close to each other.

Moreover, although the likelihood obtained from the correlation processing for the similarity, the similarity may also be calculated based on a feature amount extracted from the histogram. For example, the similarity may be calculated at least one of the following items or a suitable combination of two or more items: a height, a width, a standard deviation, a distribution, an average value and a median of the histogram, and ΔSV where the histogram exhibits a mode. Here, the height of the histogram means the highest frequency (or ratio) of the frequencies (or ratios) of all the volume backscattering differences ΔSV(s) which constitute the histogram. The width of the histogram means a width of the volume backscattering difference ΔSV where the frequency (or ratio) becomes more than a predetermined value.

Moreover, the example where the kind of a school of fish or a single fish is distinguished is described, the configuration and processing of the embodiments may also be applied to a water bottom discriminating device that discriminates a water bottom (i.e., distinguishes that the water bottom is sands, rocks or the like).

In the foregoing specification, specific embodiments of the present invention have been described. However, one of ordinary skill in the art appreciates that various modifications and changes can be made without departing from the scope of the present invention as set forth in the claims below.

**Claims**

1.  An ultrasound detection device (1) for detecting an underwater target object by using a plurality of echo signals acquired by receiving a plurality of ultrasound signals at different frequencies, the device comprising:

    a reflection intensity difference calculation module (41) for calculating differences in reflection intensities of the echo signals at different frequencies;
    **characterized in that** the device further comprises:

    a histogram calculation module (42) for calculating a histogram of the differences in reflection intensities; and
    a similarity calculation module (43) for calculating a similarity between the histogram of the differences in reflection intensities and a reference histogram, from which a classification of the target object can be determined.

2.  The ultrasound detection device of Claim 1, further comprising a display module (50) for displaying image data based on an output of the similarity calculation module (43).

3.  The ultrasound detection device of Claim 2, wherein the display module (50) is arranged to display image data of a distribution of the differences in reflection intensities.

4.  The ultrasound detection device of any of the preceding claims, wherein the similarity is a likelihood obtained from correlation processing of the histogram of the differences in reflection intensities and the reference histogram set for every classification of the target object.

5.  The ultrasound detection device of any of the preceding claims, further comprising:

    a reference database (400) for storing the reference histogram; and
    a reference histogram setting module (44) for updating the reference histogram stored in the reference database.

6.  The ultrasound detection device of any of the preceding claims, wherein
    the display module (50) is arranged to display image data of a distribution of the differences in reflection intensities.

7. The ultrasound detection device of any of the preceding claims, wherein the differences in reflection intensities of the echo signals at different frequencies are difference values of volume backscattering strength of the echo signals at different frequencies.

8. The ultrasound detection device of any of the preceding claims, wherein the reflection intensity difference calculation module (41) calculates the differences in reflection intensities only when all the echo signals at different frequencies are more than a predetermined threshold that is set for each frequency.

9. The ultrasound detection device of any of the preceding claims, further comprising a transmission module (20) for generating ultrasound transmission signals at two or more frequencies, and a transducer (10) for transmitting ultrasound waves based on the ultrasound transmission signals.

10. A school-of-fish detection device, comprising the ultrasound detection device of any of the preceding claims, wherein the target object is at least one of a school of fish or a single fish.

11. A school-of-fish detection device according to claim 10, wherein the classification of the target object is according to fish species.

12. A method of detecting an underwater target object by using a plurality of echo signals acquired by receiving a plurality of ultrasound signals at different frequencies, the method comprising:

calculating differences in reflection intensities of the echo signals at different frequencies;
**characterized by**:

calculating a histogram of the differences in the reflection intensities; and
calculating a similarity between the histogram of the differences in reflection intensities and a reference histogram, from which a classification of the target object can be determined.

13. The method of Claim 12, wherein the target object is at least one of a school of fish or a single fish.


**Patentansprüche**

1. Ultraschallerfassungsvorrichtung (1) zum Erfassen eines Unterwasser-Zielobjektes durch Verwenden einer Mehrzahl von Echosignalen, die durch Empfangen einer Mehrzahl von Ultraschallsignalen auf unterschiedlichen Frequenzen beschafft werden, wobei die Vorrichtung aufweist:

ein Reflexionsstärkedifferenz-Berechnungsmodul (41) zum Berechnen von Differenzen von Reflexionsstärken der Echosignale auf unterschiedlichen Frequenzen;
dadurch gekennzeichnet, dass die Vorrichtung weiter aufweist:

ein Histogrammberechnungsmodul (42) zum Berechnen eines Histogramms der Differenzen von Reflexionsstärken; und
ein Ähnlichkeitsberechnungsmodul (43) zum Berechnen einer Ähnlichkeit zwischen dem Histogramm der Differenzen von Reflexionsstärken und einem Referenzhistogramm, aus dem eine Klassifizierung des Zielobjektes bestimmt werden kann.

2. Ultraschallerfassungsvorrichtung nach Anspruch 1, die weiter ein Anzeigemodul (50) zum Anzeigen von Bilddaten basierend auf einer Ausgangsgröße des Ähnlichkeitsberechnungsmoduls (43) aufweist.

3. Ultraschallerfassungsvorrichtung nach Anspruch 2, wobei das Anzeigemodul (50) angeordnet ist, um Bilddaten einer Verteilung der Unterschiede von Reflexionsstärken anzuzeigen.

4. Ultraschallerfassungsvorrichtung nach einem der vorhergehenden Ansprüche, wobei die Ähnlichkeit eine Wahrscheinlichkeit ist, die aus einer Korrelationsverarbeitung des Histogramms der Differenzen von Reflexionsstärken und des Referenzhistogramms bezogen wird, das für jede Klassifizierung des Zielobjektes festgelegt ist.

5. Ultraschallerfassungsvorrichtung nach einem der vorhergehenden Ansprüche, die weiter aufweist:

eine Referenzdatenbank (400) zum Speichern des Referenzhistogramms; und
ein Referenzhistogramm-Festlegungsmodul (44) zum Aktualisieren des in der Referenzdatenbank gespeicherten Referenzhistogramms.

**6.** Ultraschallerfassungsvorrichtung nach einem der vorhergehenden Ansprüche, wobei
das Anzeigemodul (50) angeordnet ist, um Bilddaten einer Verteilung der Unterschiede von Reflexionsstärken anzuzeigen.

**7.** Ultraschallerfassungsvorrichtung nach einem der vorhergehenden Ansprüche, wobei die Differenzen von Reflexionsstärken der Echosignale auf unterschiedlichen Frequenzen Differenzwerte einer Rückstreuungsstärke der Echosignale auf unterschiedlichen Frequenzen sind.

**8.** Ultraschallerfassungsvorrichtung nach einem der vorhergehenden Ansprüche, wobei das Reflexionsstärkendifferenz-Berechnungsmodul (41) die Differenzen von Reflexionsstärken lediglich berechnet, wenn alle Echosignale auf unterschiedlichen Frequenzen größer als ein vorbestimmter Schwellenwert sind, der für jede Frequenz festgelegt ist.

**9.** Ultraschallerfassungsvorrichtung nach einem der vorhergehenden Ansprüche, die weiter ein Sendemodul (20) zum Erzeugen von Ultraschallsendesignalen auf zwei oder mehr Frequenzen, und einen Wandler (10) zum Senden von Ultraschallwellen basierend auf den Ultraschallsendesignalen aufweist.

**10.** Fischschwarmerfassungsvorrichtung, welche die Ultraschallerfassungsvorrichtung nach einem der vorhergehenden Ansprüche aufweist, wobei das Zielobjekt ein Fischschwarm und/oder ein einzelner Fisch ist.

**11.** Fischschwarmerfassungsvorrichtung nach Anspruch 10, wobei die Klassifizierung des Zielobjektes gemäß einer Fischart erfolgt.

**12.** Verfahren zum Erfassen eines Unterwasser-Zielobjektes durch Verwenden einer Mehrzahl von Echosignalen, die durch Empfangen einer Mehrzahl von Ultraschallsignalen auf unterschiedlichen Frequenzen beschafft werden, wobei das Verfahren umfasst:

Berechnen von Differenzen von Reflexionsstärken der Echosignale auf unterschiedlichen Frequenzen;
**gekennzeichnet durch**:

Berechnen eines Histogramms der Differenzen der Reflexionsstärken; und
Berechnen einer Ähnlichkeit zwischen dem Histogramm der Diffierenzen von Reflexionsstärken und einem Referenzhistogramm, aus dem eine Klassifizierung des Zielobjektes bestimmt werden kann.

**13.** Verfahren nach Anspruch 12, wobei das Zielobjekt ein Fischschwarm und/oder ein einzelner Fisch ist.

**Revendications**

**1.** Dispositif de détection d'ondes ultrasonores (1) pour détecter un objet cible sous l'eau en utilisant une pluralité de signaux d'écho acquis par la réception d'une pluralité de signaux ultrasonores à des fréquences différentes, le dispositif comprenant :

un module de calcul de la différence de l'intensité de réflexion (41) pour calculer des différences dans les intensités de réflexion des signaux d'écho à différentes fréquences ;
**caractérisé en ce que** le dispositif comprend en outre :

un module de calcul d'histogramme (42) pour calculer un histogramme des différences dans les intensités de réflexion ; et
un module de calcul de similarité (43) pour calculer une similarité entre l'histogramme des différences dans les intensités de réflexion et un histogramme de référence, à partir de laquelle une classification de l'objet cible peut être déterminée.

**2.** Dispositif de détection d'ondes ultrasonores selon la revendication 1, comprenant en outre un module d'affichage (50) pour afficher les données d'image sur la base d'une sortie du module de calcul de similarité (43).

3. Dispositif de détection d'ondes ultrasonores selon la revendication 2, dans lequel le module d'affichage (50) est agencé pour afficher des données d'image d'une distribution des différences dans les intensités de réflexion.

4. Dispositif de détection d'ondes ultrasonores selon l'une quelconque des revendications précédentes, dans lequel la similarité est une probabilité obtenue à partir d'un traitement de corrélation de l'histogramme des différences dans les intensités de réflexion et l'histogramme de référence établi pour chaque classification de l'objet cible.

5. Dispositif de détection d'ondes ultrasonores selon l'une quelconque des revendications précédentes, comprenant en outre :

   une base de données de référence (400) pour stocker l'histogramme de référence ; et
   un module d'établissement d'histogramme de référence (44) pour la mise à jour de l'histogramme de référence stocké dans la base de données de référence.

6. Dispositif de détection d'ondes ultrasonores selon l'une quelconque des revendications précédentes, où le module d'affichage (50) est agencé pour afficher des données d'image d'une distribution des différences dans les intensités de réflexion.

7. Dispositif de détection d'ondes ultrasonores selon l'une quelconque des revendications précédentes, dans lequel les différences dans les intensités de réflexion des signaux d'écho à différentes fréquences sont des valeurs de différence d'une force de rétrodiffusion volumique des signaux d'écho à des fréquences différentes.

8. Dispositif de détection d'ondes ultrasonores selon l'une quelconque des revendications précédentes, dans lequel le module de calcul de la différence d'intensité de réflexion (41) calcule les différences dans les intensités de réflexion seulement lorsque tous les signaux d'écho à des fréquences différentes sont supérieurs à un seuil prédéterminé qui est établi pour chaque fréquence.

9. Dispositif de détection d'ondes ultrasonores selon l'une quelconque des revendications précédentes, comprenant en outre un module de transmission (20) pour générer des signaux de transmission ultrasonores à deux ou plusieurs fréquences, et un transducteur (10) pour transmettre les ondes ultrasonores sur la base des signaux de transmission ultrasonores.

10. Dispositif de détection d'un banc de poissons, comprenant le dispositif de détection d'ondes ultrasonores selon l'une quelconque des revendications précédentes, où l'objet cible est au moins un banc de poissons ou un poisson unique.

11. Dispositif de détection d'un banc de poissons selon la revendication 10, où la classification de l'objet cible a lieu en accord avec une espèce de poisson.

12. Procédé de détection d'un objet cible sous l'eau en utilisant une pluralité de signaux d'écho acquis par la réception d'une pluralité de signaux ultrasonores à des fréquences différentes, le procédé comprenant :

   calculer les différences dans les intensités de réflexion des signaux d'écho à des fréquences différentes ;
   **caractérisé par** :

   calculer un histogramme des différences dans les intensités de réflexion ; et
   calculer une similarité entre l'histogramme des différences dans les intensités de réflexion et un histogramme de référence, à partir de laquelle une classification de l'objet cible peut être déterminée.

13. Procédé selon la revendication 12, dans lequel l'objet cible est au moins un parmi un banc de poissons ou un poisson unique.

TRANSMISSION MODULE
20

Txf1
Txf2

REf1
REf2

RECEPTION MODULE
30

Rxf1
Rxf2

10

SWf2
SWf1
SEf1
SEf2

ΔSV CALCULATION MODULE
41

ΔSV

ΔSV HISTOGRAM CALCULATION MODULE
42

SIMILARITY CALCULATION MODULE
43

HisΔSV

REFERENCE DB
400

RefHisΔSVx

DISPLAY CONTROL MODULE
50

DISPLAY
60

40

FISH SPECIES DISCRIMINATING INFORMATION CALCULATION MODULE

FIG. 1

FIG. 2

```
                        ┌──────────┐
                        │   S101   │
                        └────┬─────┘
                             │ S111
   ┌─────────────────────────┴─────────────────────────┐
   │ ACQUIRE RECEPTION DATA Rxf1 AND Rxf2 AT FIRST AND  │
   │ SECOND FREQUENCIES FOR EVERY PING AND DISTANCE     │
   └─────────────────────────┬─────────────────────────┘
                             │ S112
   ┌─────────────────────────┴─────────────────────────┐
   │ CALCULATE VOLUME BACKSCATTERING SV1 AND SV2 OF     │
   │ RECEPTION DATA OF FIRST AND SECOND FREQUENCIES     │
   │          FOR EVERY PING AND DISTANCE               │
   └─────────────────────────┬─────────────────────────┘
                             │   S113
                       ╱─────┴─────╲       NO
                      ╱  SV1>TH1 AND ╲────────────┐
                      ╲  SV2>TH2?    ╱            │
                       ╲─────┬─────╱              │
                             │ YES                │
                             │  S114              │  S140
   ┌─────────────────────────┴────┐    ┌──────────┴──────────┐
   │      CALCULATE VOLUME        │    │  OMIT CALCULATION OF │
   │ BACKSCATTERING DIFFERENCE ΔSV│    │ VOLUME BACKSCATTERING│
   │   FOR EVERY PING AND DISTANCE│    │ DIFFERENCE ΔSV FOR THE│
   └─────────────────────────┬────┘    │   PING AND DISTANCE  │
                             │  S115    └──────────┬──────────┘
   ┌─────────────────────────┴──────────────────┐ │
   │ OUTPUT CALCULATED VOLUME BACKSCATTERING     │ │
   │ DIFFERENCE ΔSV                              │ │
   └─────────────────────────┬──────────────────┘ │
                             │◄─────────────────────┘
                        ┌────┴─────┐
                        │  RETURN  │
                        └──────────┘
```

# FIG. 3

FIG. 4A

FIG. 4B

FIG. 5

FIG. 6

FIG. 7A

FIG. 7B

FIG. 8

**FIG. 9**

**EP 2 383 584 B1**

## REFERENCES CITED IN THE DESCRIPTION

**Patent documents cited in the description**

- JP 4025555 B
- US 5561641 A
- US 5377163 A
- WO 2006133304 A